# EUROPEAN PATENT SPECIFICATION

(11) **EP 4 122 319 B1**
(45) Date of publication and mention of the grant of the patent: **30.10.2024**
(21) Application number: 22186405.1
(22) Date of filing: 22.07.2022
(51) Int. Cl.: A01M 7/00

(54) **AGRICULTURAL SPRAYER**
FELDSPRITZE FÜR DIE LANDWIRTSCHAFT
PULVÉRISATEUR AGRICOLE

(30) Priority: 22.07.2021 IT 202100019565
(43) Date of publication of application: 25.01.2023
(73) Proprietor: Europiave S.r.l., 31010 Cimadolmo (TV) (IT)
(72) Inventor: BATTISTELLA, FABIO, 31010 Cimadolmo (Treviso) (IT); FURLAN, GIULIANO, 31010 Cimadolmo (Treviso) (IT)
(74) Representative: Minghetti, Mauro

(56) References cited:
- EP-A1- 0 951 829
- CN-U- 206 402 999
- FR-A1- 2 969 902
- FR-A1- 2 986 941
- US-A1- 2020 315 155
- US-B2- 10 945 424

## Description

### TECHNICAL FIELD OF THE INVENTION

The present invention concerns an agricultural atomiser.

More in detail, the present invention relates to an improved mounted agricultural atomiser of the recovery type.

### PRIOR ART

In the fruit trees and/or fruit plants (including, but not limited to, vineyards) growing sector, agricultural atomisers are used for applying to the canopy of such trees phytosanitary products (typically pesticides, but also other products), which fight the onset of diseases and/or the proliferation of pests, and the like.

In general, an agricultural atomiser can be, for instance, of the self-propelled type, when it has its own motor that powers the machine and the operation of all its groups, or mounted or towed, when on the contrary, it is driven by a tractor, to which it is connected (through a traditional three-point hitch, or a hook - respectively).

A specific type of atomiser, of particular interest for the scope of the present invention, is the so-called double row type, which includes four vertical diffusers, also known as screens, arranged parallel to one another and opposite each other two by two, at mutually adjustable distances.

These diffusers have the function of dispensing the phytosanitary products, in nebulized form, to the canopy of the trees in the farmed rows, and at the same time also that of collecting the nebulized product which may not have deposited on the canopy, to avoid its dispersion in the environment.

Thanks to the presence of four diffusers opposed two by two, the atomiser can evidently treat two rows at the same time.

The phytosanitary product is normally contained in a special tank located on-board the machine; the flow of nebulized phytosanitary product, to be directed to the plants, is generally produced through a pumping system that takes the product from the tank and creates a mixture of air and product, which is then dispensed through nozzles.

Such nozzles are, for example, arranged vertically, aligned along one of the sides of each diffuser.

The diffusers have, in turn, the task of spreading the nebulized phytosanitary product on the canopy of the plant as uniformly as possible, avoiding excess product in some areas and/or no product in others, and also, as mentioned, avoiding product dispersion in the environment, especially without it having first deposited on the canopies.

To achieve this, each one of the machine diffusers is connected to a ventilation system that generates an air flow, which hits the sprayed phytosanitary product jets and projects them onto the surfaces to be treated.

There are machines on the market that have diffuser ventilation systems that are different from each other.

For example, in some machine types, the ventilation system includes one or more fans - or axial fans - installed on each diffuser, and oriented so that the air flow produced by them is directed towards the other diffuser, installed at the front.

In another type of machine, described for example in the Italian patent no. 1367812, the ventilation system comprises a turbine, mounted on the machine carriage, from which flexible hoses or sleeves branch off, connected to the upper ends of the diffusers - respectively.

Such upper ends of the diffusers are in communication, in turn, with channels or chambers, made inside them, provided with openings suitable for delivering air flows, with adequate pressures and flow rates, which hit the jets of phytosanitary product, to project them and apply them to the parts of the plants to be treated. These openings can be circular in shape and vertically aligned, arranged just behind the ducts that carry the plant protection product dispensing nozzles, so that the air flow emitted by them fully invests the jet of the air-phytosanitary product mixture.

The turbine of the ventilation system can be mounted, with the interposition of a suitable overgear drive, in line with the pump, or pumps, which feed the phytosanitary liquid, and the whole assembly can be powered (e.g. in the most common case of a mounted or towed machine) by the tractor power take-off.

The machine described in the Italian patent n. 1367812, while offering better performance than the performance of the type with axial fans mounted on the diffusers, does nonetheless have drawbacks.

A first weak point of machines of this type is their overall dimensions, and in particular the dimensions of the ventilation system designed in the manner described.

The four flexible hoses that connect the turbine to their respective diffusers are very bulky and imply some limitations, for instance, for the mobility of the entire machine, and also for the relative mobility of the diffusers moving closer to and away from each other, when adjustments are required.

It has also been observed that this ventilation system (but also the one equipped with axial fans) is very noisy, and also requires a considerable consumption of tractor fuel.

Another aspect that could be improved, and certainly not one of lesser importance, is the penetrative capacity of the air flows generated by the currently known ventilation systems, including that described in patent no. 1367812.

It was observed that the performance of the known ventilation systems is unsatisfactory mainly in regard to the homogeneity of distribution of the phytosanitary product to the leaves of the plants to be treated.

More in detail, systems of the known type usually produce highly static air jets, which tend to hit the leaves of the plant so as to substantially bend or crush them downwards, thus depositing the product only on the upper face of such leaves. Furthermore, such bending, or pressing, the leaves downwards prevents the jets of air emitted by the diffusers, carrying the nebulized phytosanitary product, from penetrating the innermost branches of the plant, and therefore from reaching a bigger amount of underlying leaves which also need treatment. Further known agricultural atomisers are disclosed in documents FR 2 986 941 A1, US 10 945 424 B2, EP 0 951 829 A1, CN 206 402 999 U, US 2020/315155 A1 and FR 2 969 902 A1.

### OBJECTS OF THE INVENTION

The technical aim of the present invention is to improve the state of the art in the field of agricultural atomisers.

Within such technical aim, it is an object of the present invention to provide an agricultural atomiser which allows the aforementioned drawbacks to be overcome. Another object of the present invention is to provide an agricultural atomiser improved in terms of overall dimensions of the machine.

A further object of the present invention is to provide an agricultural atomiser which is better performing in terms of operating noise.

Another object of the present invention is to provide an agricultural atomiser which is better performing in terms of tractor fuel consumption.

Yet another object of the present invention is to provide an agricultural atomiser which allows to obtain better penetration of the air jets, which carry the nebulized phytosanitary product, into the canopy of the plants to be treated.

This aim and these objects are all achieved by the agricultural atomiser according to the attached claim 1.

The atomiser comprises a frame that supports a tank containing the phytosanitary product, a plurality of diffusers to dispense the phytosanitary product to the canopy of the plants to be treated, and at least one pumping system of the phytosanitary product towards the diffusers, taken from the tank.

The aforementioned diffusers each comprise a plurality of dispensing nozzles for an air-phytosanitary product mixture, connected to the pumping system and ventilation means suitable for diffusing and projecting the aforementioned air-phytosanitary product mixture, emitted by the nozzles, towards the canopy of the plants to be treated.

According to an aspect of the invention, the ventilation means comprise, for each diffuser, a respective centrifugal turbine, located at the top of the diffuser, in communication with an air distribution channel provided in the diffuser.

Thanks to this solution, the need to use a single turbine that simultaneously feeds all the diffusers on the atomiser is eliminated.

Each diffuser comprises a plurality of air delivery holes, in communication with the aforementioned distribution channel.

According to an aspect of the invention, said ventilation means comprise, for each centrifugal turbine, a respective electric motor, coupled to the turbine, and powered by a generator coupled to the tractor power take-off.

This solution is particularly effective, advantageous and efficient from the point of view of the reduction of footprint, noise and consumption, moreover it allows a more versatile management of the operation of each atomiser diffuser.

According to the invention, the aforesaid delivery holes are aligned, and comprise two sets characterised by two different geometries, alternating with each other.

More in detail, the holes of the first set are circular and flat (and not protruding with respect to the external surface, or wall, of the distribution channel).

The holes of the second set are, on the other hand, delimited by respective converging edges, according to the direction of the air flow (and therefore protruding with respect to the external surface, or wall, of the distribution channel).

In each diffuser, the holes of the first set are alternated with the holes of the second set, and are arranged alongside the nozzles for dispensing the air-product mixture.

By applying this solution - and in particular thanks to the different speed of the air outlet from the aforementioned first and second sets of holes, positioned alternately to each other - the applicant observed the formation of intense swirling phenomena within the canopies of the plants, which actively contribute to lifting the leaves of the plant, thus allowing:
the phytosanitary product to deposit also on the bottom surface of the leaves;
the penetration of the phytosanitary product also to the innermost leaves of the plant canopy.

Dependent claims refer to preferred and advantageous embodiments of the invention.

### BRIEF DESCRIPTION OF THE DRAWINGS

Further features and advantages of the present invention will be clarified in the detailed description of some preferred, but not exclusive, embodiments of an agricultural atomiser, illustrated only by way of non-limiting example in the accompanying drawings wherein:
figure 1 is a perspective detailed view of one of the diffusers of the agricultural atomiser, according to the invention;
figure 2 is another axonometric view of one of the diffusers of the atomiser;

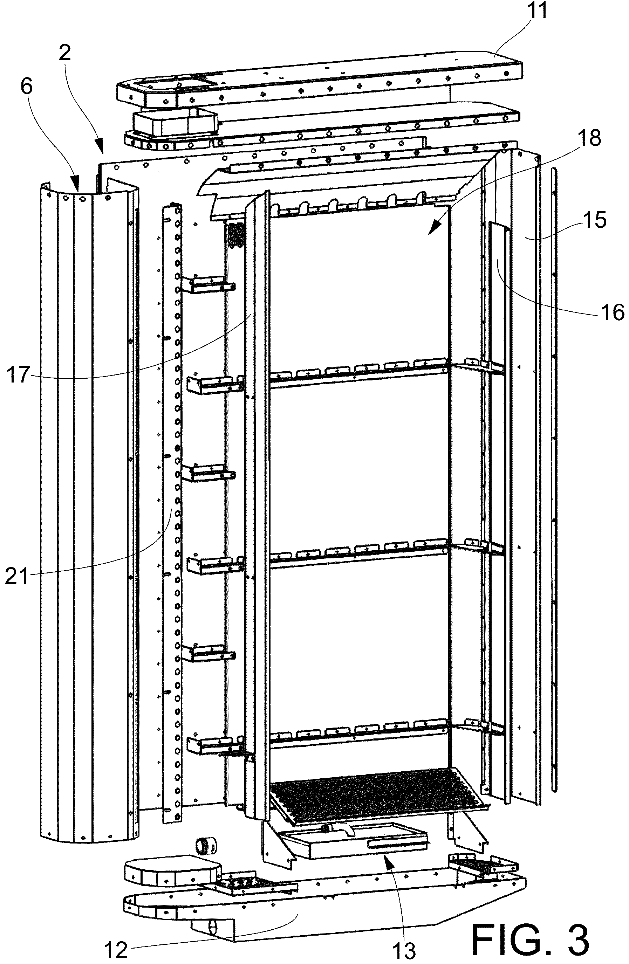

figure 3 is an exploded axonometric view of the diffuser of figure 2;
figure 4 is a front view of the diffuser;
figure 5 is a section of the diffuser taken along the plane V-V of figure 4;
figure 6 is a section of the diffuser taken along the plane VI-VI of figure 4;
figure 7 is a section of the diffuser taken along the plane VII-VII of figure 4;
figure 8 is a perspective view of one of the centrifugal turbines of the atomiser;
figure 9 is another perspective view of one of the centrifugal turbines of the atomiser, with some parts removed for greater clarity;
figure 10 is a front view of the deflector, comprising the first and second delivery holes, of each one of the diffusers of the atomiser;
figure 11 is a perspective view of the deflector of figure 10;
figure 12 is a detail of figure 11;
figures 13, 14, 15 are cross sections of the deflector of figure 10, made according to respective different planes;
figure 16 is a front view of a first air diverter of each one of the diffusers of the atomiser;
figure 17 is a perspective view of the same first diverter of figure 16;
figure 18 is a cross section of the same first diverter of figure 16;
figure 19 is a front view of a second air diverter of each one of the diffusers of the atomiser;
figure 20 is a perspective view of the same second diverter of figure 20;
figure 21 is a cross section of the same second diverter of figure 19;
figure 22 is a detail of the electrical diagram of the atomiser, relating, in particular, to the ventilation means of the diffusers.

### EMBODIMENTS OF THE INVENTION

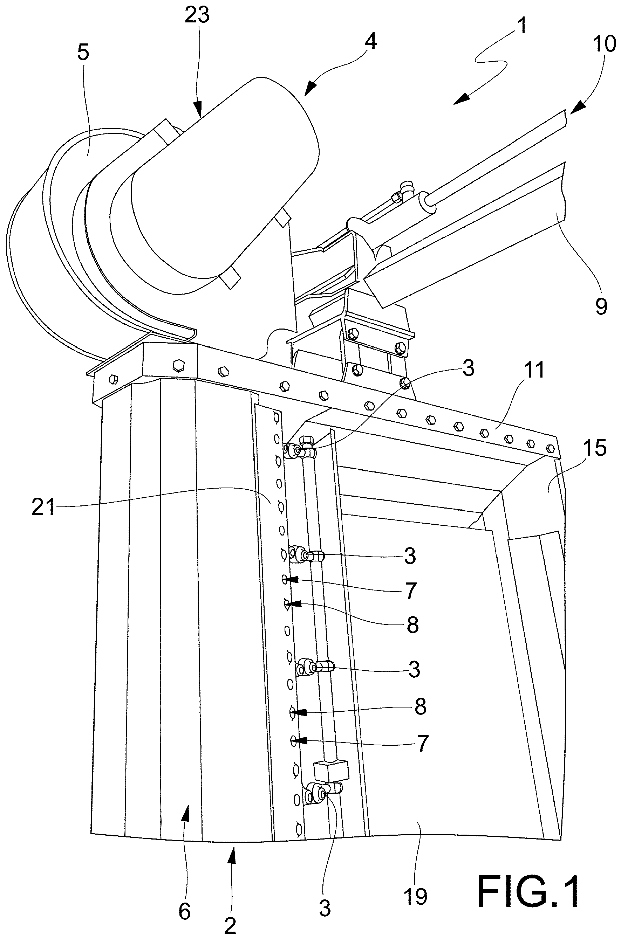

With reference to figure 1, the reference number 1 generally indicates an agricultural atomiser according to the present invention.

It should be noted that, in the attached figures, for the sake of simplicity, the agricultural atomiser 1, which is the object of the present invention, is shown only in its parts of greater interest for the purpose of describing the aspects considered to be innovative.

The agricultural atomiser 1 comprises a frame (not shown in detail in the attached figures), provided with wheels for travelling on the ground.

The frame can be of any shape and dimensions in relation to the specific application requirements.

The frame is provided with mechanical connection means to a tractor, which can be of any type, for example a three-point hitch, a hook, etc. (again, in relation to the different use requirements).

The frame supports a tank containing the phytosanitary product, in a liquid state. The tank can have any features (e.g. in terms of capacity, shape, positioning on the frame), without limitations to the purposes of the present invention.

The atomiser 1 also comprises a plurality of diffusers 2 of the phytosanitary product towards the canopy of the plants to be treated.

The atomiser 1 also comprises at least one pumping system of the plant protection product, taken from the tank, towards the diffusers 2 (this pumping system, for the sake of simplicity, is not shown in detail in the figures).

The diffusers 2 each comprise a plurality of nozzles 3 for delivering an air-phytosanitary product mixture.

The aforesaid nozzles 3 are connected to the pumping system of the phytosanitary product.

The diffusers 2 also comprise ventilation means, indicated globally with 4, suitable for diffusing the aforementioned air-product mixture, delivered by the nozzles 3, towards the canopies of the plants.

According to an aspect of the invention, the ventilation means 4 comprise, for each diffuser 2, a respective centrifugal turbine 5.

This centrifugal turbine 5 is placed at the top of the respective diffuser 2; moreover, the ventilation means 4 comprise, for each diffuser 2, a respective air distribution channel 6, provided in the diffuser 2 (in particular, provided inside the diffuser 2).

This solution, wherein each diffuser 2 is provided with its own centrifugal turbine 5, which can be controlled independently from the others, constitutes a considerable advantage from multiple points of view.

In the first place, the ventilation means 4 are simplified from the construction point of view, and this leads to a reduction in the overall dimensions of the machine (thanks above all to the elimination of very long and large diameter flexible ducting).

The simplification of the ventilation means 4 also determines their lower-noise operation (again, thanks primarily to the elimination of the aforementioned long ducting).

The air distribution channel 6 extends along one of the sides of the diffuser 2 (in the vertical direction, in use).

The ventilation means 4 also comprise, for each diffuser 2, a plurality of air delivery holes 7, 8, in communication with the aforementioned distribution channel 6.

According to the invention, the aforesaid delivery holes 7, 8 are aligned and are divided into two distinct sets, i.e. a first set and a second set, alternating with each other, and characterised by two respective different geometries.

More in detail, the first delivery holes 7 of the first set are circular and flat (by "flat" it is meant that their edge is not protruding with respect to the external surface, or wall, of the distribution channel 6).

The second delivery holes 8 of the second set are, by contrast, delimited by respective converging edges, according to the direction of the air flow.

In this respect, therefore, the second holes 8 of the second set substantially protrude outwards, with respect to the external surface, or wall, of the distribution channel 6.

In other words, therefore, in each diffuser 2 the first delivery holes 7 of the first set are alternated with the second delivery holes 8 of the second set.

According to another aspect of the invention, the first delivery holes 7 and the second delivery holes 8 are arranged alongside the nozzles 3 for dispensing the air-product mixture, or laterally with respect to the aforementioned nozzles 3, as better described below.

As shown schematically in figure 1, each one of the diffusers 2 of the atomiser 1 is supported by a respective arm 9, provided with translation means 10 with respect to the frame of the atomiser 1 (e.g. of the hydraulic type, but possibly also of another type).

In particular, according to a preferred version of the invention, the atomiser 1 comprises four diffusers 2, arranged two by two facing each other.

This solution allows, in particular, two rows of trees to be treated at the same time.

In other versions of the invention, the atomiser 1 could comprise an even higher number of diffusers 2, in relation to the different required uses.

The translation means 10 can be used to carry out all the adjustments necessary for the correct operation of the atomiser 1; for example, they can be used to bring the diffusers 2 closer/further away from each other, even in the case of simultaneous use on two rows.

Each diffuser 2 comprises an upper element 11 (connected to the support arm 9) and a lower element 12, opposed to each other.

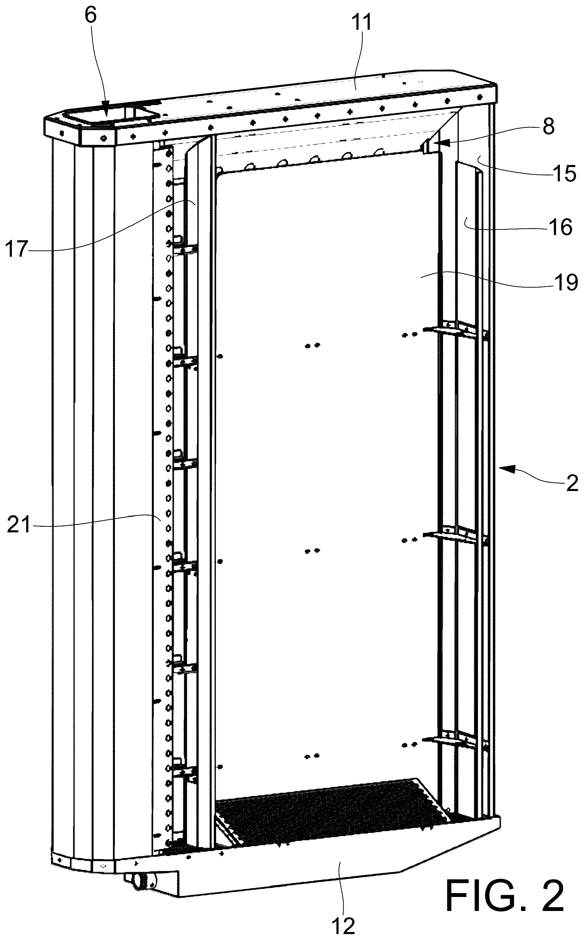

As shown in figure 2, the lower element 12 of each diffuser 2 comprises recovery and recirculation means 13 of the phytosanitary product that has not settled on the leaves of the plant (typically, the product dispensed by the other diffuser 2, positioned in front, i.e. opposite).

The aforesaid recovery and recirculation means 13 can be of any type, without limitations for the purposes of the present invention.

They may comprise, in particular, suction means for the collected fluid, which, after suitable filtration, is reintroduced into the tank.

Each diffuser 2 comprises a rear wall 14, connected to the upper 11 and lower 12 elements, and at least one lateral side 15 (opposed to the distribution channel 6.) Each diffuser 2 also comprises a first air diverter 16 and a second air diverter 17, positioned one facing the other between the distribution channel 6 and the lateral side 15 (and arranged in the vertical direction, in use).

The first diverter 16 and the second diverter 17 define, between them, a compartment 18 for collecting the phytosanitary product.

Each diffuser 2 also comprises a grating 19, positioned inside the compartment 18 and parallel, or substantially parallel, to the rear wall 14.

The aforementioned grating 19 prevents coarse materials (branches, leaves, etc.) carried by the air flow (in particular, generated by the diffuser 2 located frontally) from ending up at the bottom of the compartment 18, and therefore in the recovery and recirculation means 13.

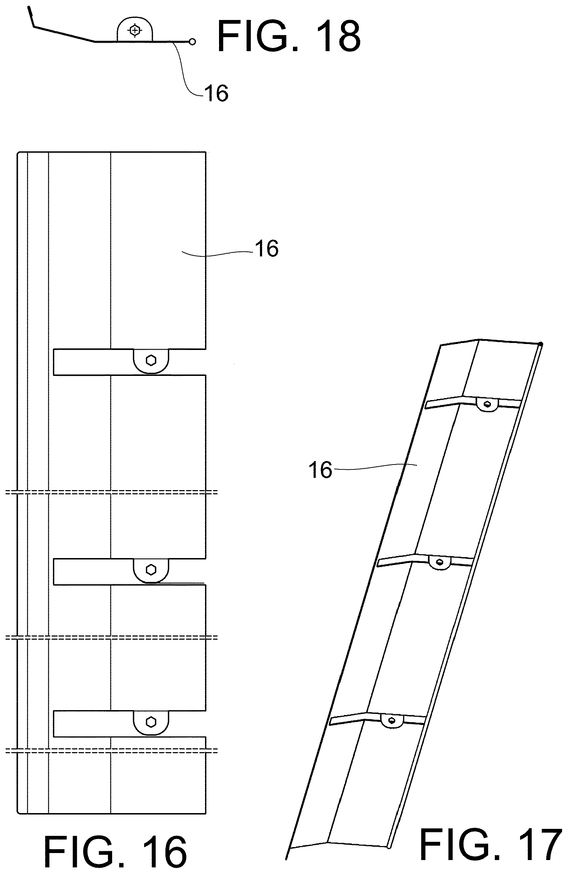

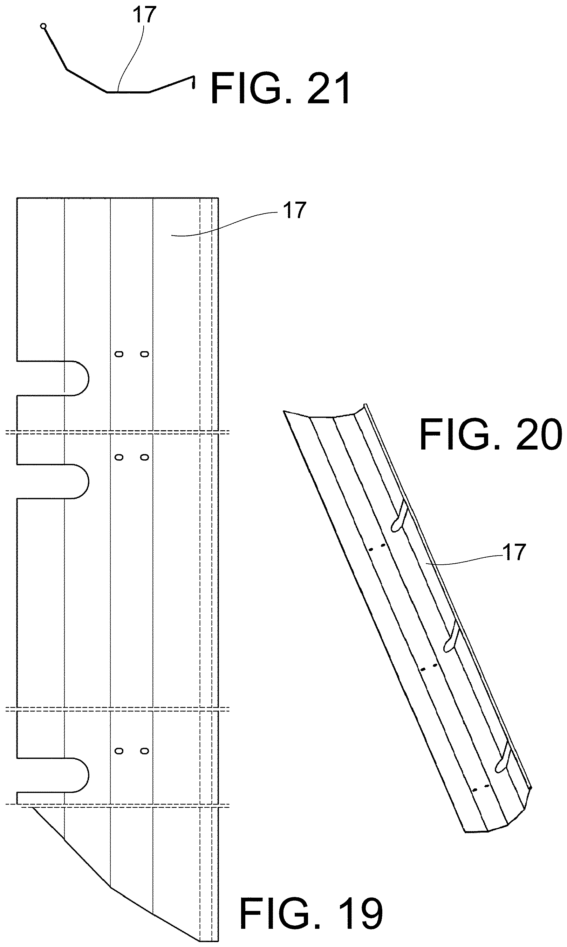

The first air diverter 16 (illustrated in detail in figures 16, 17, 18) and the second air diverter 17 (illustrated in detail in figures 19, 20, 21) of each diffuser 2 of the atomiser 1 have a substantially hollow shaping, such as to collect and convey the air flow that carries the phytosanitary product, emitted by the other diffuser 2 (placed frontally) as efficiently as possible into the compartment 18, preventing the aforementioned product from being dispersed in the environment.

The distribution channel 6 of each diffuser 2 (provided along one side thereof) comprises an air outlet 20, which develops in the vertical direction, in use. Furthermore, the ventilation means 4 comprise, for each diffuser 2, a respective deflector 21, which in turn comprises the first delivery holes 7 and the second delivery holes 8, arranged alternately with each other, having the features previously described.

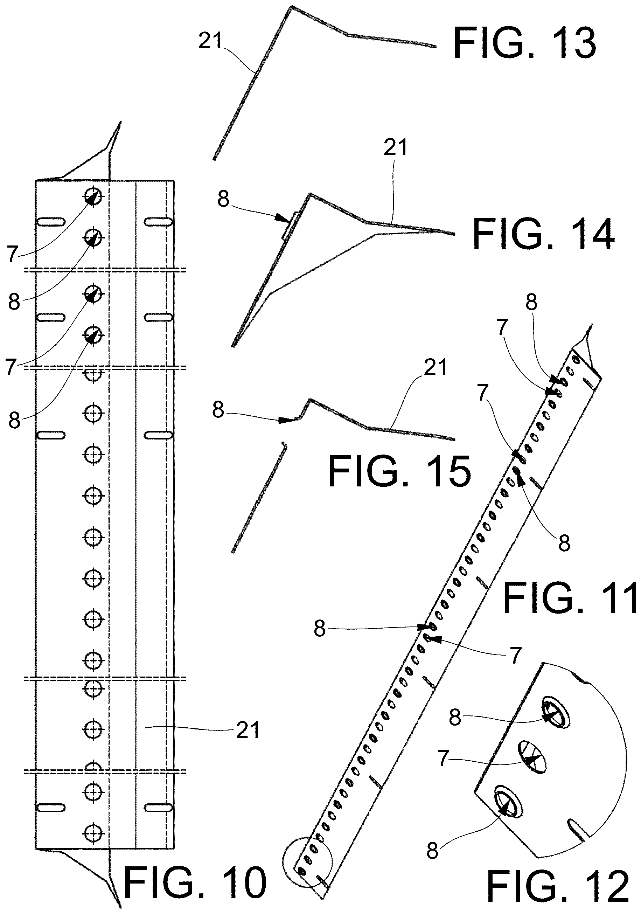

The deflector 21 is illustrated, in various details, in figures 10-15.

The deflector 21 is made from a cut and folded sheet of metal, and its development in plan is illustrated, in particular, in figure 10.

Figures 12, 14, 15 show, in particular, the converging (and protruding) edge of the second delivery holes 8.

The deflector 21 is mounted on the air outlet 20 of the distribution channel 6, so as to occlude it, to force the air to be let out through the first, second delivery holes 7, 8.

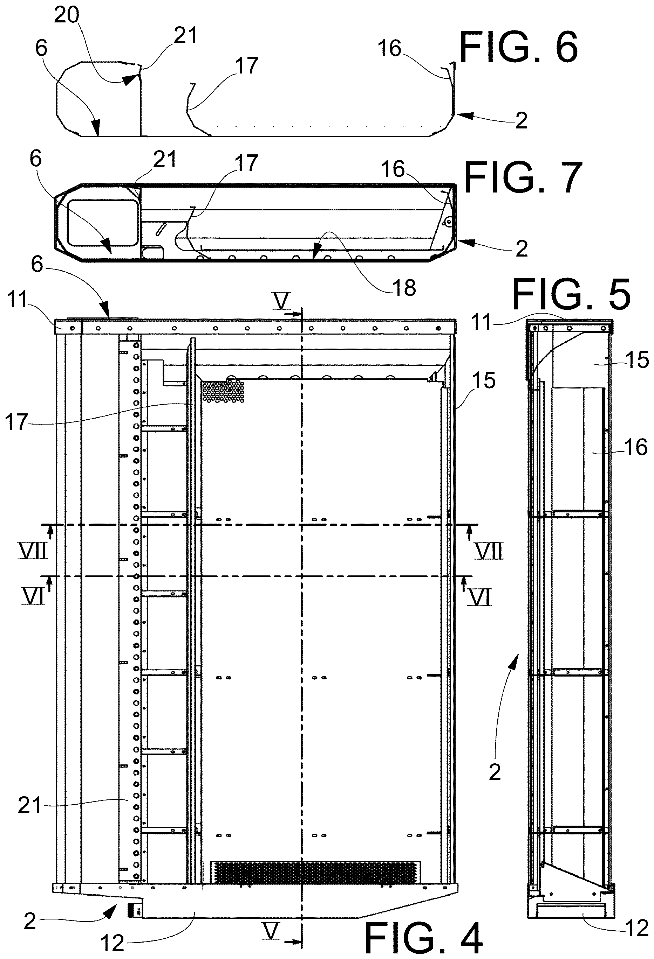

Furthermore - see in particular figures 6, 7 - the deflector 21 is mounted and shaped so that the axes of the first, second delivery holes 7, 8 are inclined with respect to an ideal plane perpendicular to the rear wall 14 of the diffuser 2, and therefore inclined by a given predetermined angle, different from 0°, with respect to the axes of the nozzles 3.

More in detail, the axes of the first, second delivery holes 7, 8 are inclined so that, in use, the air jets delivered by them intersect the jets of air-phytosanitary fluid mixture delivered by the nozzles 3.

In this way, the air jets emitted by the first, second delivery holes 7, 8 hit, at a given angle of incidence different from 0°, the jets of air-phytosanitary product mixture delivered by the nozzles 3, and effectively project the mixture on to the surface of the plant leaves.

This effect, in synergy with the different air outlet speeds from the aforementioned first and second delivery holes 7, 8, positioned alternately to each other, determines - as the applicant has been able to observe - the formation of intense swirling phenomena, or of intense turbulence, within the canopy of the plants, which actively contributes to lifting the leaves (substantially from the bottom up, or also laterally).

The lifting of the leaves of the canopy advantageously allows the plant protection product to be deposited also on the lower surface of such leaves, which is normally only marginally reached when using known types of atomisers. Furthermore, the lifting of the leaves of the canopy allows to achieve, advantageously, the penetration of the phytosanitary product also as far as the innermost areas of the canopy, which would otherwise be hindered by the more superficial leaves.

It follows that a better distribution of the phytosanitary product also results in less product waste.

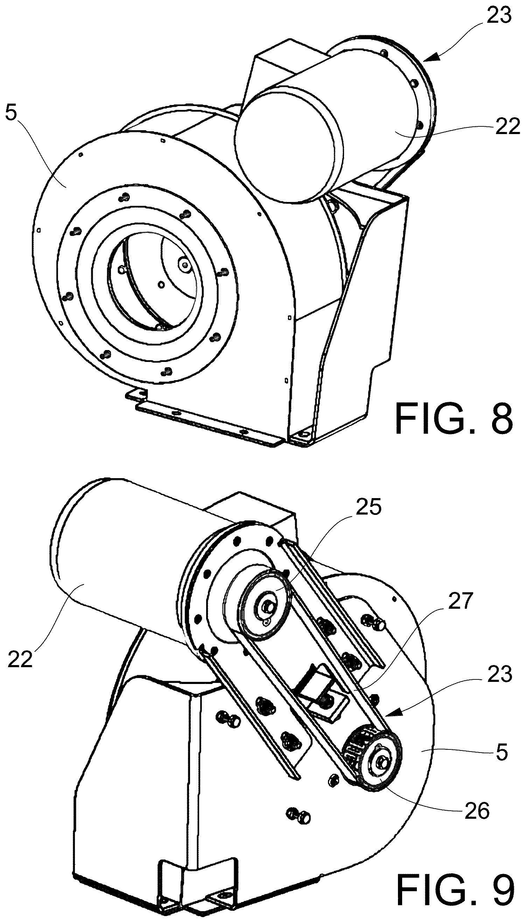

According to another aspect of the invention, the ventilation means 4 comprise, for each centrifugal turbine 5, a respective electric motor 22 (see the detail of figure 8).

Each electric motor 22 is coupled to its respective centrifugal turbine 5 by means of a transmission, indicated as a whole with 23.

Furthermore, each electric motor 22 is powered in parallel by a single generator 24, coupled to the power take-off of the tractor.

With reference to the detail of figure 9, the transmission 23 comprises a first toothed pulley 25, coupled to the output axis of the electric motor 22. Furthermore, the transmission 23 comprises a second toothed pulley 26, coupled to the inlet axis of the centrifugal turbine 5.

The transmission 23 also comprises a toothed belt 27, wound on the aforementioned pulleys 25, 26.

The transmission 23 is sized so that the rotation speed of the input axis of the centrifugal turbine 5 is higher than the rotation speed of the output axle of the electric motor 22.

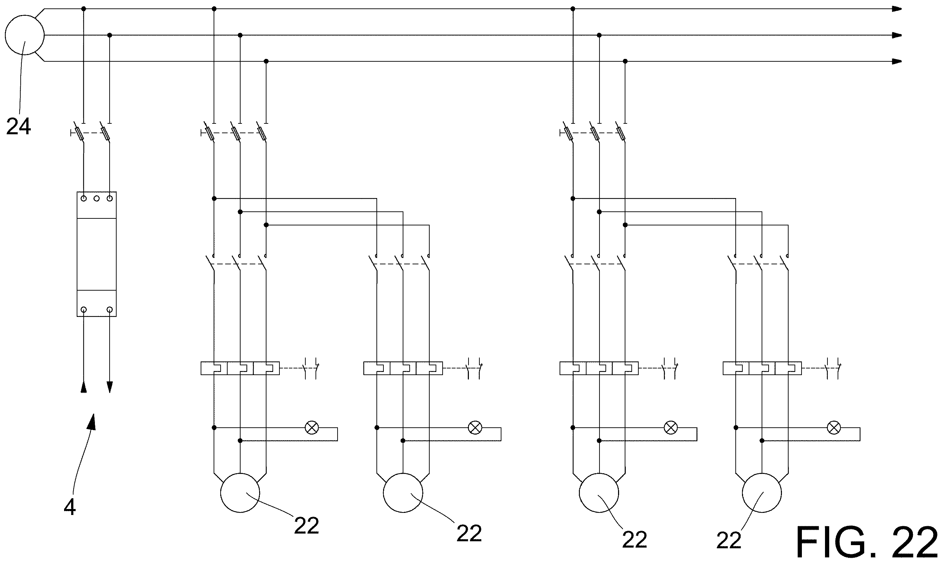

For better understanding, figure 22 shows a detail of the electrical diagram of the atomiser 1 relating, in particular, to the ventilation means 4, in an embodiment of the invention of particular practical interest.

More in detail, this diagram illustrates the power supply, through the same generator 24, to the electric motors 22 of the ventilation means 4 of an atomiser 1 comprising four diffusers 2, coupled in pairs, two of which are left-handed (internal and external) and two right-handed (internal and external).

As can be seen in this diagram, the two left-handed diffusers 2 and the two right-handed diffusers 2 of the atomiser 1 can be powered autonomously and independently (for the case e.g. of single row to be treated at a time).

In an embodiment of the invention of particular practical interest, each electric motor 22 of the ventilation means 4 is of the 48 V three-phase asynchronous type. Furthermore, the generator 24 consists, in particular, in a three-phase 48 V alternator.

As can be understood, this is a low voltage supply, compared to other machines on the market, which constitutes a considerable advantage from the point of view of the operational safety of the atomiser 1.

The generator 24 has been sized to supply 48V (from 50 Hz to 58 Hz) considering that the tractor power take-off normally has a rotation speed between 420 and 480 rpm.

By coupling the centrifugal turbine 5 directly to the output axis of the respective electric motor 22, it would travel at a speed between 2200 and 2700 rpm; it has been observed that this speed is not sufficient to generate jets of air out of the first, second delivery holes 7, 8 with the desired characteristics (in particular, at the desired speed).

To overcome this drawback, the aforementioned belt transmission 23 has been introduced, which allows obtaining a rotation speed of the centrifugal turbine 5 between 3200 and 4050 rpm.

This rotation speed range has proved to be optimal for obtaining the desired speed characteristics of the air coming out of the first, second delivery holes 7, 8.

The adjustment of the output voltage from the generator 24 can occur through an electronic board capable of guaranteeing a stable output voltage and frequency. The electric motors 22 are started individually in order not to overload the generator by means of power contactors with on-board thermal cut-out which protects each motor 22 in case of overload due to faulty operation.

Last but not least, it should be noted that the proposed solution, with a plurality of centrifugal turbines 5 driven by respective electric motors 22 powered by a single generator 24, proves to be remarkably advantageous in terms of tractor fuel consumption reduction.

It has thus been seen how the invention achieves the intended purposes.

Various modifications and variations can be made in the invention thus conceived, without departing from the scope of the appended claims.

In practice, the materials used as well as the contingent shapes and dimensions can vary greatly according to needs, without thereby departing from the scope of protection of the following claims.

## Claims

1. An agricultural atomiser (1) comprising a frame that supports a tank containing a phytosanitary product, a plurality of diffusers (2) of the phytosanitary product towards the canopy of the plants to be treated, and at least one pumping system for the phytosanitary product, taken from said tank, towards said diffusers (2), each of said diffusers (2) comprising a plurality of nozzles (3) for dispensing an air-phytosanitary product mixture, connected to said pumping system, and ventilation means (4), suitable for spreading and projecting the air-phytosanitary product mixture, emitted by said nozzles (3), towards the canopy of the plants to be treated, said ventilation means (4) comprising for each one of said diffusers (2), a respective centrifugal turbine (5), located at the top of said diffuser (2), communicating with an air distribution channel (6) provided in said diffuser (2), **characterised in that** said ventilation means (4) comprise, for each diffuser (2), a plurality of air delivery holes (7, 8), communicating with said distribution channel (6), said delivery holes (7, 8) being arranged aligned and divided into two distinct series, i.e. a first series and a second series alternating with each other, and **characterised by** two respective different geometries, **and in that** the axes of said first, second delivery holes (7, 8) are inclined so that, in use, the air jets delivered by them intersect the jets of air-phytosanitary fluid mixture delivered by said nozzles (3).

2. An atomiser (1) according to claim 1, wherein said ventilation means (4) comprise, for each centrifugal turbine (5), a respective electric motor (22), coupled to said turbine (5) and powered in parallel by a single generator (24), coupled to the tractor power take-off.

3. An atomiser (1) according to claim 2, wherein each electric motor (22) is coupled to the respective centrifugal turbine (5) by means of a belt-type transmission (23).

4. An atomiser (1) according to claim 3, wherein said transmission (23) comprises a first toothed pulley (25), coupled to the output axis of said electric motor (22), a second toothed pulley (26), coupled to the output axis of said centrifugal turbine (5), and a toothed belt (27) wound on said pulleys (25, 26), said transmission (23) being dimensioned so that the rotation speed of the input axis of said centrifugal turbine (5) is higher than the rotation speed of the output axis of said electric motor (22).

5. An atomiser (1) according to one of claims 2-4, wherein each electric motor (22) of the ventilation means (4) is of the 48 V three-phase asynchronous type.

6. An atomiser (1) according to claim 5, wherein said generator (24) consists of a 48 V three-phase alternator.

7. An atomiser (1) according to one of the preceding claims, wherein said first delivery holes (7) of the first series are circular and flat, i.e. their edge does not protrude with respect to the outside surface or wall of said distribution channel (6).

8. An atomiser (1) according to claim 7, wherein said second delivery holes (8) of the second series are delimited by respective converging edges, according to the direction of the air flow, and therefore, substantially protruding to the outside with respect to the external surface or wall of said distribution channel (6).

9. An atomiser (1) according to claim 7, wherein said ventilation means (4) comprise, for each diffuser (2), a respective deflector (21), mounted on said distribution channel (6), which comprises, in turn, said first, second delivery holes (7, 8), said deflector (21) being mounted and shaped so that the axes of said first, second delivery holes (7, 8) are inclined to a given predetermined angle, different from 0°, with respect to the axes of said nozzles (3), so that the air jets emitted by said first, second delivery holes (7, 8) hit, at a given angle of incidence, different from 0°, the jets of air-phytosanitary product mixture dispensed by said nozzles (3).

## Patentansprüche

1. Feldspritze (1) für di Landwirtschaft, umfassend einen Rahmen, der einen Behälter trägt, der ein Pflanzenschutzmittel enthält, eine Vielzahl von Diffusoren (2) des Pflanzenschutzmittels in Richtung des Blätterdachs der zu behandelnden Pflanzen und mindestens ein Pumpsystem für das Pflanzenschutzmittel, das aus dem Behälter entnommen wird, in Richtung der Diffusoren (2), wobei jeder der Diffusoren (2) eine Vielzahl von Düsen (3) zum Ausgeben einer Mischung aus Luft und Pflanzenschutzmittel umfasst, die mit dem Pumpsystem verbunden sind, und Belüftungsmittel (4), die zum Verteilen und Ausstoßen der Mischung aus Luft und Pflanzenschutzmittel, die von den Düsen (3) abgegeben wird, in Richtung des Blätterdachs der zu behandelnden Pflanzen geeignet sind, wobei die Belüftungsmittel (4) für jeden der Diffusoren (2) eine jeweilige Kreiselturbine (5) umfassen, die sich an der Oberseite des Diffusors (2) befindet und mit einem Luftverteilungskanal (6) in Verbindung steht, der in dem Diffusor (2) vorgesehen ist, **dadurch gekennzeichnet, dass** die Belüftungsmittel (4) für jeden Diffusor (2) eine Vielzahl von Luftzufuhrlöchern (7, 8) umfassen, die mit wobei der Verteilungskanal (6) und die Zufuhrlöcher (7, 8) ausgerichtet angeordnet und in zwei unterschiedliche Reihen unterteilt sind, d. h. eine erste Reihe und eine zweite Reihe, die einander abwechseln, und durch zwei jeweils unterschiedliche Geometrien gekennzeichnet sind, **und dadurch, dass** die Achsen der ersten und zweiten Zufuhrlöcher (7, 8) so geneigt sind, dass im Gebrauch die von ihnen abgegebenen Luftstrahlen die Strahlen der Mischung aus Luft und Pflanzenschutzflüssigkeit schneiden, die von den Düsen (3) abgegeben werden.

2. Feldspritze (1) nach Anspruch 1, wobei die Belüftungsmittel (4) für jede Kreiselturbine (5) jeweils einen Elektromotor (22) umfassen, der mit der Turbine (5) gekoppelt ist und parallel von einem einzigen Generator (24) angetrieben wird, der mit der Zapfwelle des Traktors gekoppelt ist.

3. Feldspritze (1) nach Anspruch 2, wobei jeder Elektromotor (22) mittels eines Riemengetriebes (23) mit der jeweiligen Kreiselturbine (5) gekoppelt ist.

4. Feldspritze (1) nach Anspruch 3, wobei das Getriebe (23) eine erste Zahnscheibe (25), die mit der Ausgangsachse des Elektromotors (22) verbunden ist, eine zweite Zahnscheibe (26), die mit der Ausgangsachse der Kreiselturbine (5) verbunden ist, und einen Zahnriemen (27) umfasst, der um die Scheiben (25, 26) gewickelt ist, wobei das Getriebe (23) so bemessen ist, dass die Drehgeschwindigkeit der Eingangsachse der Kreiselturbine (5) höher ist als die Drehgeschwindigkeit der Ausgangsachse des Elektromotors (22).

5. Feldspritze (1) gemäß einem der Ansprüche 2 bis 4, wobei jeder Elektromotor (22) der Belüftungseinrichtung (4) vom 48 V-Dreiphasen-Asynchrontyp ist.

6. Feldspritze (1) gemäß Anspruch 5, wobei der Generator (24) aus einem 48 V-Dreiphasen-Wechselstromgenerator besteht.

7. Feldspritze (1) nach einem der vorhergehenden Ansprüche, wobei die ersten Zufuhrlöcher (7) der ersten Reihe kreisförmig und flach sind, d. h. ihr Rand ragt nicht über die Außenfläche oder Wand des Verteilungskanals (6) hinaus.

8. Feldspritze (1) nach Anspruch 7, wobei die zweiten Zufuhrlöcher (8) der zweiten Reihe je nach Richtung des Luftstroms durch entsprechende konvergierende Kanten begrenzt sind und daher im Verhältnis zur Außenfläche oder Wand des Verteilungskanals (6) im Wesentlichen nach außen vorstehen.

9. Feldspritze (1) nach Anspruch 7, wobei die Belüftungsmittel (4) für jeden Diffusor (2) einen jeweiligen Deflektor (21) umfassen, der an dem Verteilungskanal (6) montiert ist, der wiederum die ersten und zweiten Zufuhrlöcher (7, 8) umfasst, wobei der Deflektor (21) so montiert und geformt ist, dass die Achsen der ersten und zweiten Zufuhrlöcher (7, 8) in einem bestimmten, vorgegebenen Winkel, der von 0° verschieden ist, gegenüber den Achsen der Düsen (3) geneigt sind, so dass die von den ersten und zweiten Zufuhrlöchern (7, 8) abgegebenen Luftstrahlen in einem bestimmten, von 0° verschiedenen Einfallswinkel auf die Strahlen der Mischung aus Luft und Pflanzenschutzmittel treffen, die von den Düsen (3) abgegeben werden.

## Revendications

1. Pulvérisateur agricole (1) comprenant un châssis qui supporte un réservoir contenant un produit phytosanitaire, une pluralité de diffuseurs (2) du produit phytosanitaire vers la voûte des plantes à traiter, et au moins un système de pompage du produit phytosanitaire, prélevé dans ledit réservoir, vers lesdits diffuseurs (2), chacun desdits diffuseurs (2) comprenant une pluralité de buses (3) de distribution d'un mélange air-produit phytosanitaire, reliées audit système de pompage, et des moyens de ventilation (4), aptes à épandre et à projeter le mélange air-produit phytosanitaire, émis par lesdites buses (3), vers la voûte des plantes à traiter, lesdits moyens de ventilation (4) comprenant pour chacun desdits diffuseurs (2), une turbine centrifuge respective (5), située au sommet dudit diffuseur (2), communiquant avec un canal de distribution d'air (6) prévu dans ledit diffuseur (2), **caractérisé en ce que** lesdits moyens de ventilation (4) comprennent, pour chaque diffuseur (2), une pluralité d'orifices de distribution d'air (7, 8), communiquant avec ledit canal de distribution (6), lesdits orifices de distribution (7, 8) étant disposés alignés et divisés en deux séries distinctes, à savoir une première série et une seconde série alternant entre elles, et **caractérisées par** deux géométries respectives différentes, **et en ce que** les axes desdits premier, second orifices de distribution (7, 8) sont inclinés de sorte que, en utilisation, les jets d'air délivrés par ceux-ci croisent les jets de mélange air-fluide phytosanitaire délivrés par lesdites buses (3).

2. Pulvérisateur (1) selon la revendication 1, dans lequel lesdits moyens de ventilation (4) comprennent, pour chaque turbine centrifuge (5), un moteur électrique respectif (22), couplé à ladite turbine (5) et alimenté en parallèle par un générateur unique (24), couplé à la prise de force du tracteur.

3. Pulvérisateur (1) selon la revendication 2, dans lequel chaque moteur électrique (22) est couplé à la turbine centrifuge respective (5) au moyen d'une transmission à courroie (23).

4. Pulvérisateur (1) selon la revendication 3, dans lequel ladite transmission (23) comprend une première poulie dentée (25), couplée à l'axe de sortie dudit moteur électrique (22), une seconde poulie dentée (26), couplée à l'axe de sortie de ladite turbine centrifuge (5), et une courroie crantée (27) enroulée sur lesdites poulies (25, 26), ladite transmission (23) étant dimensionnée de sorte que la vitesse de rotation de l'axe d'entrée de ladite turbine centrifuge (5) soit supérieure à la vitesse de rotation de l'axe de sortie dudit moteur électrique (22).

5. Pulvérisateur (1) selon l'une des revendications 2 à 4, dans lequel chaque moteur électrique (22) du moyen de ventilation (4) est de type asynchrone triphasé 48 V.

6. Pulvérisateur (1) selon la revendication 5, dans lequel ledit générateur (24) est constitué d'un alternateur triphasé de 48 V.

7. Pulvérisateur (1) selon l'une des revendications précédentes, dans lequel lesdits premiers orifices de distribution (7) de la première série sont circulaires et plats, c'est-à-dire que leur bord ne fait pas saillie par rapport à la surface ou paroi extérieure dudit canal de distribution (6).

8. Pulvérisateur (1) selon la revendication 7, dans lequel lesdits seconds orifices de distribution (8) de la seconde série sont délimités par des bords convergents respectifs, selon la direction du flux d'air, et donc, sensiblement en saillie vers l'extérieur par rapport à la surface ou paroi externe dudit canal de distribution (6).

9. Pulvérisateur (1) selon la revendication 7, dans lequel lesdits moyens de ventilation (4) comprennent, pour chaque diffuseur (2), un déflecteur respectif (21), monté sur ledit canal de distribution (6), lequel comprend, à son tour, lesdits premier, deuxième orifices de distribution (7, 8), ledit déflecteur (21) étant monté et conformé de telle sorte que les axes desdits premier, deuxième orifices de distribution (7, 8) soient inclinés d'un angle prédéterminé donné, différent de 0°, par rapport aux axes desdites buses (3), de telle sorte que les jets d'air émis par lesdits premier, deuxième orifices de distribution (7, 8) frappent, sous un angle d'incidence donné, différent de 0°, les jets de mélange air-produit phytosanitaire distribués par lesdites buses (3).
